# EUROPEAN PATENT SPECIFICATION

(11) **EP 1 839 482 B1**
(45) Date of publication and mention of the grant of the patent: **20.03.2013**
(21) Application number: 05701675.0
(22) Date of filing: 18.01.2005
(51) Int. Cl.: A01G 9/12

(54) **CLIP FOR FASTENING PLANT STEMS OR BRANCHES TO A CORD, POST OR OTHER GUIDE ELEMENT**
KLEMME ZUR BEFESTIGUNG VON PFLANZENSTÄNGELN ODER ZWEIGEN AN EINER SCHNUR, EINEM PFOSTEN ODER EINEM ANDEREN FÜHRUNGSELEMENT
PINCE PERMETTANT DE FIXER DES TIGES OU DES BRANCHES DE PLANTES À UNE CORDE, À UN TUTEUR OU À TOUT AUTRE ÉLÉMENT DE GUIDAGE

(43) Date of publication of application: 03.10.2007
(73) Proprietor: DESARROLLOS ESPECIALES DE SISTEMAS DE ANCLAJE, S.A., 08840 Viladecans ( BARCELONA) (ES)
(72) Inventor: CORCHÓN ZAMORA, Carlos, 31620 Huarte (Navarra) (ES)
(74) Representative: Urteaga Simarro, José Antonio
(86) International application number: PCT/ES2005/000020
(87) International publication number: WO 2006/077269

(56) References cited:
- AU-A- 1 353 683
- ES-U- 285 513
- ES-U- 296 397
- ES-Y- 137 052
- GB-A- 357 570
- NL-A- 9 400 113

## Description

### Technical field

The invention relates to a staple for tying or training plant stems or branches to a string, tape or other guide element, for its use preferably in greenhouses, generally employed so that a plant with a natural tendency to fall can be tied to a guide element that hangs in the greenhouse, thus allowing it to grow upwards or at the required angle.

### Prior art

In the prior art, various staples that are used to tie or train plants to a thin string or similar guide element so that the plants grow upwards either straight or at a certain angle are known. The most commonly used staples are essentially cylinder-shaped plastic staples that are opened and closed by a hinged part, the closure of which is secured by means of a clip on the area opposite to the hinged part. Examples of these staples are shown in ES0296397U and ES0285513U.

These types of cylindrical plastic staple perform well, i.e., they are capable of bearing high sliding and opening tensions. This means that they ensure that the staple grips both the guide element and the stem or branch of the plant tightly. However, due to their geometrical characteristics, cylindrical plastic staples also present various drawbacks.

First of all, the hinged area of the staple features two flat faces that close on themselves when the staple is closed, the function of these flat faces being to attach themselves to and clamp around the string or guide element. Said flat faces present the particularity that when the staple is closed there is no gap between them. Because of this, and as the staple is of a rigid plastic material, it cannot be used with guide elements of a certain thickness (poles, etc) as in such cases the flat faces cannot be brought together when attempting to close the staple. If guide elements of a certain thickness were attempted to be used, the clip would not be able to be fastened.

Additionally, after a first phase in which the staple is brought towards and hooked onto the guide element and the branch of the plant, the positioning of the staple requires a second phase in which the staple must be closed until the clip on the staple is secured. This task must be performed by hand, which is generally difficult due to the fact that users of the staple wear thick gloves for working in the greenhouse or similar.

Alternatively, staples such as that shown in ES0137052U are known, to allow tying a plant stem or branch to a guide element. These staples are capable of being closed providing clamping of the guide element and the branch. The staple is formed of a thin metal rod that is bent to present a shape that comprises two convex arms, a central part, and a convex projection that projects towards the exterior of the staple and that is formed in said central part from two points of inflection. When closed, the staple delimits two interior cavities: an interior cavity in the area of the convex projection, for clamping around the guide element, and an interior cavity of the staple, for clamping around the plant stem or branch.

It is an objective of this invention to design a staple for tying or training plant stems or branches to a string, tape or other guide element that, offering suitable performance for the applications for which plastic staples are valid, may be used not only with thin guide elements but also with guide elements of a certain thickness such as thick string or even poles.

It is another objective of this invention that the staple in question does not have to be closed by hand but can be closed using a tool.

It is another objective of this invention to achieve a staple that is more environmentally friendly than rigid plastic staples and which, in this respect, uses a more appropriate material. The staple will also require a smaller amount of material to perform the same function as the plastic staple.

In relation to the above, it is another objective of this invention to reduce the size or volume of the staple with the objective of reducing the space required for its storage.

### Detailed description of the invention

In order to achieve the above objectives, the invention defines a staple according to claim 1 for tying a plant stem or branch to a guide element, string or similar, where the staple takes the form of a thin metal rod that is bent to present a specific shape that enables it to clamp around the guide element and the branch independently.

The shape of the staple is characterised in that it is basically an omega shape with a sunken central part and a convex projection formed on said central part. In other words, the staple is formed by two convex arms, a central part shaped towards the interior of the staple, and a convex projection towards the exterior of the staple formed in said central part and formed from two points of inflection. As a consequence, the staple delimits two interior cavities: an interior cavity in the area of the convex projection, designed to clamp around the guide element, and an interior cavity of the staple itself, designed to clamp around the plant stem or branch.

In order to tie the branch to the guide element, the staple is firstly hooked to the guide element so that the guide element is positioned in the interior cavity of the convex projection. The branch is then brought closer until it is positioned inside the interior cavity of the staple itself. Finally, the staple is closed by means of an appropriate tool until it clamps around both the guide element and the branch. When the staple is closed, the points of inflection are brought together, thereby delimiting the clamping areas of the guide element and branch above and below said points of inflection.

Different embodiments of the invention are contemplated in which the convex projection presents various sizes, the objective being that the staple is capable of being tightened onto guide elements of various thicknesses. The staple may thus be suitable for use with guide elements as varied as tapes, strings of various thicknesses, and even poles. In the embodiments for guide elements of a greater thickness, the convex projection of the staple is characterised in that it has a size that is such that when the staple is closed, the points of inflection come into contact without the interior cavity of the convex projection disappearing.

Different embodiments of the invention are contemplated in relation to the shape of the central part. Thus, said central part, between the arms and the points of inflection, may be formed either with straight shapes or curved shapes.

Similarly, said central part may be sunken towards the interior of the staple (the aforementioned omega shape), or be at the same level as the arms or projection (a more or less convex C-shape).

With reference to the achieving of the objectives of the invention, it should be pointed out that the inventive staple offers a considerably smaller volume than the cylindrical plastic staple as it is made from a thin metal rod. In addition, the batch or set of inventive staples is presented in the form of combs in which the staples are stuck together, thereby reducing the space required to store said batches in comparison to the space required to store the plastic staples, which are presented in bags containing loose staples, i.e. staples that are not attached to each other.

With regard to the other objectives, the various embodiments of the invention allow that the staple can be used with guide elements of a reduced or increased thickness. Furthermore, as the inventive metal staple does not require a clip to be able to remain closed, the closure of the staple is simplified and merely involves the application of the necessary force by means of a suitable tool to bend the arms of the staple. Because of the characteristics of the metallic material, the arms tend to remain in a bent or closed position.

### Description of the figures

Details of the invention can be seen in the accompanying non-limiting drawings:
- Figure 1 shows a perspective of a first embodiment of the inventive staple.
- Figure 2 shows a front view of the staple of Figure 1 once closed.
- Figure 3 shows a perspective of a second embodiment of the inventive staple.
- Figure 4 shows a front view of the staple of Figure 3 once closed.
- Figure 5 shows a perspective of a third embodiment of the inventive staple.
- Figure 6 shows a perspective of a fourth embodiment of the
   inventive staple.

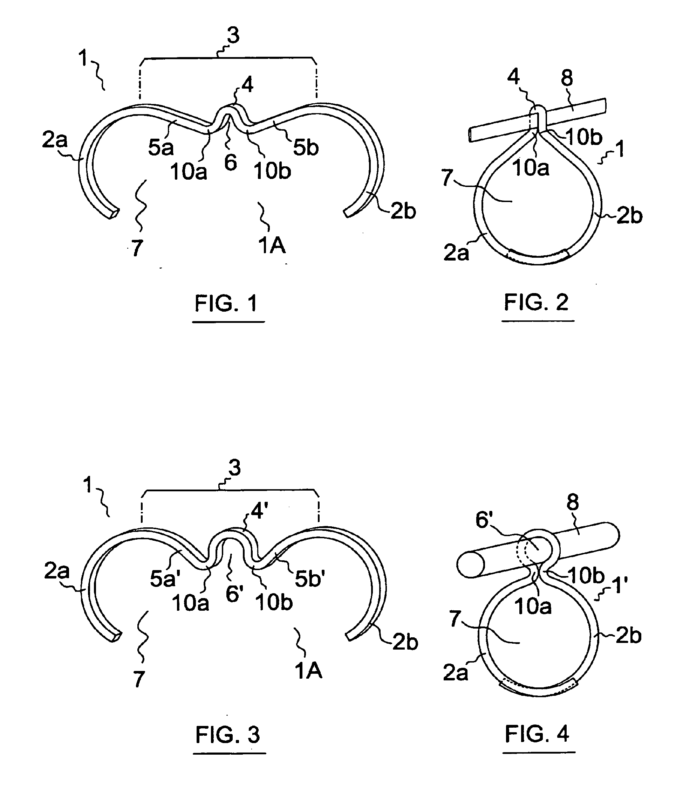

Figure 1 shows a perspective of a first embodiment of the inventive staple. The staple (1) is a thin metal rod that is bent into an approximate omega shape (1A). In other words, the staple (1) is formed by two convex arms (2a, 2b) and a central part (3). The central part (3) is shaped towards the interior of the staple (1) and, in the embodiment of the figure, is formed with straight shapes (5a, 5b). A convex projection (4) that delimits an interior cavity (6) is formed in the central part (3) from points of inflection (10a, 10b). The staple (1) also delimits an interior cavity (7).

Figure 2 shows the staple (1) in a closed position, once the guide element (8) has been inserted in the cavity (6) of the convex projection (4), once the plant stem or branch, not shown, has been inserted in the cavity (7) of the staple (1), and once a tool has closed the staple until the arms (2a, 2b) of the staple (1) overlap sufficiently to prevent the branch from coming loose from the staple (1). In this situation, the points of inflection (10a, 10b) come into contact, the staple (1) offering a double clamping: a clamping and tightening of the guide element (8) above said points of inflection (10a, 10b) and a clamping of the plant branch, not shown, in the interior cavity (7) which remains below the points of inflection (10a, 10b). This embodiment of the staple (1) is valid for guide elements (8) that are not overly thick, such as tapes, thin strings, etc.

Figure 3 shows a perspective of a second embodiment of the invention, where this second staple (1) is once again a metal rod bent into a C-shape with arms (2a, 2b) and a sunken central part (3) that provides the staple (1) with an omega shape (1A). In this case, the central part (3) is formed with curved shapes (5a', 5b'), and in its central area it presents a convex projection (4') that is positioned from points of inflection (10a, 10b) and which delimits an interior cavity (6') that is larger than the interior cavity (6) of the embodiment of Figure 1.

As can be seen in Figure 4, when the arms (2a, 2b) of the staple (1) are caused to close on themselves by the use of an appropriate tool, the points of inflection (10a, 10b) are brought together and come into contact to delimit two clamping areas: a clamping and tightening of the guide element (8) above the points of inflection (10a, 10b) and a clamping of the plant branch, not shown, in the interior cavity (7) which remains below the points of inflection (10a, 10b). In this case, the coming together and contact of the points of inflection (10a, 10b) does not result in the disappearance of the interior cavity (6'). In consequence, this second embodiment of the staple (1) is capable of exerting a clamping and tightening on thicker guide elements (8) than those of the embodiment of Figure 1. In other words, the staple (1) is capable of training the plant, not shown, onto thicker strings and even poles (9) and other similar elements.

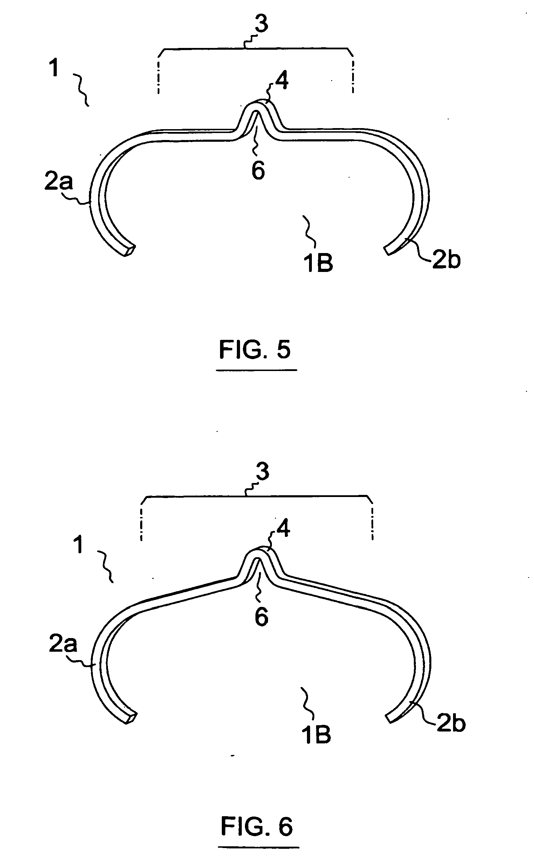

Figure 5 shows a perspective of a third embodiment of the inventive staple (1), in which the central part (3) is shaped substantially level with the arms (2a, 2b), as a result of which the staple (1) presents an approximate C-shape (1B).

Figure 6 shows a perspective of a fourth embodiment of the inventive staple (1), in which the central part (3) is shaped above the arms (2a, 2b) and towards the exterior of the staple (1), as a result of which the staple (1) also presents an approximate C-shape (1B).

## Claims

1. Staple (1) for tying a plant stem or branch to a guide element (8), capable of being closed providing an clamping of the guide element (8) and the branch, the staple (1) being formed of a thin metal rod that is bent to present a shape that comprises two convex arms (2a, 2b), a central part (3), and a convex projection (4, 4') that projects towards the exterior of the staple and that is formed in said central part (3) from two points of inflection (10a, 10b), - the staple (1) delimiting two interior cavities: an interior cavity (6, 6') in the area of the convex projection (4, 4'), for clamping around the guide element (8), and an interior cavity (7) of the staple (1), for clamping around the plant stem or branch, **characterised in that**:
- when the staple (1) is closed, the points of inflection (10a, 10b) are brought together and come into contact, delimiting the two said cavities for clamping the guide element (8) and the plant branch, the former being located above the points of inflection (10a, 10b) and the latter being located below the points of inflection (10a,10b), wherein the points of inflection (10a, 10b) coming into contact makes said cavities independent from each other.

2. Staple (1) for tying a plant stem or branch to a guide element (8), according to claim 1, wherein when the staple (1) is closed, the points of inflection (10a,10b) are brought together and come into contact, and the interior cavity (6) of the convex projection (4) disappears.

3. Staple (1) for tying a plant stem or branch to a guide element (8), according to claim 1, wherein when the staple (1) is closed, the points of inflection (10a, 10b) are brought together and come into contact, and the interior cavity (6') of the convex projection (4') does not disappear.

4. Staple (1) for tying a plant stem or branch to a guide element (8), according to claims 1, 2 or 3, wherein the central part (3) is shaped towards the interior of the staple (1) giving the staple (1) an approximate omega shape (1A).

5. Staple (1) for tying a plant stem or branch to a guide element (8), according to claims 1, 2 or 3, wherein the central part (3) is formed level with the arms (2a, 2b), giving the staple (1) an approximate C-shape (1B).

6. Staple (1) for tying a plant stem or branch to a guide element (8), according to claims 1, 2 or 3, wherein the central part (3) is shaped towards exterior of the staple (1), giving the staple (1) an approximate C-shape (1B).

7. Staple (1) for tying a plant stem or branch to a guide element (8), according to claims 1, 2, 3, 4, 5 or 6, wherein the central part (3), between the arms (2a, 2b) and the points of inflection (10a, 10b), is formed with straight shapes (5a, 5b).

8. Staple (1) for tying a plant stem or branch to a guide element (8), according to claims 1, 2, 3, 4, 5 or 6, wherein the central part (3), between the arms (2a, 2b) and the points of inflection (10a, 10b), is formed with curved shapes (5a', 5b').

## Patentansprüche

1. Klemme (1) zur Befestigung von Pflanzenstengeln oder Zweigen an einem Führungselement (8), die geschlossen werden kann und für ein Festklemmen des Führungselements (8) und des Zweigs sorgt, wobei die Klemme (1) aus einem dünnen Metallstab besteht, der gebogen wird, so dass er eine Form bildet, die zwei konvexe Arme (2a, 2b), einen Mittelteil (3) und einen konvexen Vorsprung (4, 4') umfasst, der in Richtung des Äußeren der Klemme herausragt, und der an besagtem Mittelteil (3) aus zwei Wendepunkten (10a, 10b) gebildet wird, wobei die Klemme (1) zwei innere Aushöhlungen begrenzt: eine innere Aushöhlung (6, 6') im Bereich des konvexen Vorsprungs (4, 4'), zum Festklemmen rund um das Führungselement (8), und eine innere Aushöhlung (7) der Klemme (1), zum Festklemmen rund um den Pflanzenstengel oder Zweig, durch Folgendes gekennzeichnet:
wenn die Klemme (1) geschlossen wird, werden die Wendepunkte (10a, 10b) zusammengeführt und miteinander in Kontakt gebracht, und begrenzen somit die zwei besagten Aushöhlungen zum Festklemmen des Führungselements (8) und des Pflanzenzweigs, wobei erstere oberhalb der Wendepunkte (10a, 10b) und letztere unterhalb der Wendepunkte (10a, 10b) liegt, und die Wendepunkte (10a, 10b), die miteinander in Kontakt gebracht werden, besagte Aushöhlungen unabhängig voneinander machen.

2. Klemme (1) zur Befestigung von Pflanzenstengeln oder Zweigen an einem Führungselement (8), nach Anspruch 1, wobei, wenn die Klemme (1) geschlossen wird, die Wendepunkte (10a, 10b) zusammengeführt und miteinander in Kontakt gebracht werden, und die innere Aushöhlung (6) des konvexen Vorsprungs (4) verschwindet.

3. Klemme (1) zur Befestigung von Pflanzenstengeln oder Zweigen an einem Führungselement (8), nach Anspruch 1, wobei, wenn die Klemme (1) geschlossen wird, die Wendepunkte (10a, 10b) zusammengeführt und miteinander in Kontakt gebracht werden, und die innere Aushöhlung (6') des konvexen Vorsprungs (4') nicht verschwindet.

4. Klemme (1) zur Befestigung von Pflanzenstengeln oder Zweigen an einem Führungselement (8), nach den Ansprüchen 1, 2 oder 3, wobei der Mittelteil (3) in Richtung des Inneren der Klemme (1) geformt ist, was der Klemme (1) eine angenäherte Omega-Form (1A) verleiht.

5. Klemme (1) zur Befestigung von Pflanzenstengeln oder Zweigen an einem Führungselement (8), nach den Ansprüchen 1, 2 oder 3, wobei der Mittelteil (3) so geformt wird, dass er auf der gleichen Ebene wie die Arme (2a, 2b) liegt, was der Klemme (1) eine angenäherte C-Form (1B) verleiht.

6. Klemme (1) zur Befestigung von Pflanzenstengeln oder Zweigen an einem Führungselement (8), nach den Ansprüchen 1, 2 oder 3, wobei der Mittelteil (3) zum Äußeren der Klemme (1) hin geformt wird, was der Klemme (1) eine angenäherte C-Form (1 B) verleiht.

7. Klemme (1) zur Befestigung von Pflanzenstengeln oder Zweigen an einem Führungselement (8), nach den Ansprüchen 1, 2, 3, 4, 5 oder 6, wobei der Mittelteil (3) zwischen den Armen (2a, 2b) und den Wendepunkten (10a, 1019) durch gerade Formen (5a, 5b) gebildet wird.

8. Klemme (1) zur Befestigung von Pflanzenstengeln oder Zweigen an einem Führungselement (8), nach den Ansprüchen 1, 2, 3, 4, 5 oder 6, wobei der Mittelteil (3) zwischen den Armen (2a, 2b) und den Wendepunkten (10a, 1019) durch gebogene Formen (5a', 5b') gebildet wird.

## Revendications

1. Agrafe (1) pour attacher une tige ou une branche d'une plante à un tuteur (8), capable d'être fermée en fournissant une fixation entre le tuteur (8) et la branche, l'agrafe (1) étant composée d'une fine tige métallique courbe pour présenter une forme qui comprend deux bras convexes (2a, 2b), une partie centrale (3) et une projection convexe (4, 4') qui se projette vers l'extérieur de l'agrafe et qui est composée dans ladite partie centrale (3) de deux points d'inflexion (10a, 10b), l'agrafe (1) délimitant deux cavités intérieures: une cavité intérieure (6, 6') dans la zone de la projection convexe (4, 4'), à fixer autour du tuteur (8), et une cavité intérieure (7) de l'agrafe (1), à fixer autour de la tige de la plante ou de la branche, **caractérisé par le fait que** :
- lorsque l'agrafe (1) est fermée, les points d'inflexion (10a, 10b) sont rassemblés et entrent en contact, délimitant les deux cavités déjà décrites pour fixer le tuteur (8) et la branche de la plante, le premier étant situé au-dessus des points d'inflexion (10a, 10b) et la dernière étant située sous les points d'inflexion (10a, 10b), où les points d'inflexion (10a, 10b) entrant en contact permettent aux deux cavités d'être indépendantes l'une de l'autre.

2. Agrafe (1) pour attacher une tige ou une branche d'une plante à un tuteur (8), selon la revendication 1, où lorsque l'agrafe (1) est fermée, les points d'inflexion (10a, 10b) sont ramenés ensemble et entrent en contact, et la cavité intérieure (6) de la projection convexe (4) disparaît.

3. Agrafe (1) pour attacher une tige ou une branche d'une plante à un tuteur (8), selon la revendication 1, où lorsque l'agrafe (1) est fermée, les points d'inflexion (10a, 10b) sont ramenés ensemble et entrent en contact, et la cavité intérieure (6') de la projection convexe (4') ne disparaît pas.

4. Agrafe (1) pour attacher une tige ou une branche d'une plante à un tuteur (8), selon les revendications 1, 2 ou 3, où la partie centrale (3) est formée vers l'intérieur de l'agrafe (1) en donnant à l'agrafe (1) une forme approximative d'oméga (1A).

5. Agrafe (1) pour attacher une tige ou une branche d'une plante à un tuteur (8), selon les revendications 1, 2 ou 3, où la partie centrale (3) est formée de niveau avec les bras (2a, 3b) en donnant à l'agrafe (1) une forme approximative de C (1B).

6. Agrafe (1) pour attacher une tige ou une branche d'une plante à un tuteur (8), selon les revendications 1, 2 ou 3, où la partie centrale (3) est formée vers l'extérieur de l'agrafe (1) en donnant à l'agrafe (1) une forme approximative de C (1B).

7. Agrafe (1) pour attacher une tige ou une branche d'une plante à un tuteur (8), selon les revendications 1, 2, 3, 4, 5 ou 6, où la partie centrale (3), entre les bras (2a, 2b) et les points d'inflexion (10a, 10b), est composée de formes droites (5a, 5b).

8. Agrafe (1) pour attacher une tige ou une branche d'une plante à un tuteur (8), selon les revendications 1, 2, 3, 4, 5 ou 6, où la partie centrale (3), entre les bras (2a, 2b) et les points d'inflexion (10a, 10b), est composée de formes courbes (5a', 5b').
